# EUROPEAN PATENT SPECIFICATION

(11) **EP 1 535 139 B1**
(45) Date of publication and mention of the grant of the patent: **22.11.2006**
(21) Application number: 03763894.7
(22) Date of filing: 10.07.2003
(51) Int. Cl.: G06F 3/00

(54) **Peripheral device for a data processing system**
Peripheriegerät für ein Datenverarbeitungssystem
Périphérique destiné à un système de traitement de données

(30) Priority: 11.07.2002 EP 02368076
(43) Date of publication of application: 01.06.2005
(73) Proprietor: International Business Machines Corporation, Armonk, N.Y. 10504 (US); Compagnie IBM France, 92400 Courbevoie (FR)
(72) Inventor: LONGOBARDI, Giuseppe, I-00100 Roma (IT); CAGGESE, Sergio, I-00144 Roma (IT); ZU, Luciano, I-00177 Roma (IT)
(74) Representative: Zerbi, Guido Maria
(86) International application number: PCT/EP2003/008477
(87) International publication number: WO 2004/008301

(56) References cited:
- EP-A- 0 672 980
- US-A- 5 892 502
- US-B1- 6 243 258

## Description

### Technical field

The present invention relates to the computer field, and more specifically to a peripheral device for a data processing system.

### Background art

A peripheral device is a hardware unit that is used to interact with a data processing system, such as a Personal Computer (PC); particularly, input devices allow a user to enter data and/or commands into the computer, whereas output devices provide information to the user.

A keyboard is one of the most common input devices. The keyboard consists of a set of mechanical buttons (keys), which are pressed by the user to enter information into the computer. The keys are arranged to resemble a typewriter keyboard, with a few extra keys for computer commands and a numeric keypad.

A drawback of the keyboards known in the art is that they are very often ineffective to meet the input needs of several applications running on the computer. As a matter of fact, although the function and the position of the keys may be configured by software, the shape and the size of the keys are imposed by the hardware layout of the keyboard and cannot be changed in any way.

In order to solve this problem, alternative input devices have been proposed in the last years for specific applications. For example, a console with a joystick is commonly used for computer games; moreover, a touch-screen enables the user to enter and display information on the same device in kiosks providing several types of computer-related services (such in an Automated Teller Machine, or ATM).

However, each alternative input device is commonly designed for a specific application. This causes the proliferation of a number of different input devices; moreover, the connection of each input device to the computer is quite complex, and involves waste of time and space. As far as the touch-screen is specifically concerned, although it may be configured to provide a natural interface for computer novices, it is unsatisfactory for several applications. As a matter of fact, most users find the touch-screen tiring to the arms after long use; in any case, the standard keyboard is far and away preferred when working with applications doing ordinary computing work.

Document US 6,243,258 teaches a hand held user computer interface capable of being automatically switched between a keyboard input mode and a pen input mode.

### Summary of the invention

It is an object of the' present invention to provide a peripheral device, which can be used either as a standard keyboard or as an alternative input device.

It is another object of the present invention to avoid proliferation of different input devices.

It is yet another object of the present invention to provide a peripheral device that may be configured for specific applications in a simple manner.

The accomplishment of these and other related objects is achieved by a peripheral device according to claim 1.

The present invention also provides a data processing system including the peripheral device.

The novel features believed to be characteristic of this invention are set forth in the appended claims. The invention itself, however, as well as these and other related objects and advantages thereof, will be best understood by reference to the following detailed description to be read in conjunction with the accompanying drawings.

### Brief description of the drawings

- **Figures 1a-1b**: are a pictorial representation of a desktop in which the peripheral device of the invention can be used;
- **Figures 2a-2b**: show the peripheral device in different positions;
- **Figures 3a-3c**: are partially cut away, side elevation views of a notebook including a further embodiment of the peripheral device;
- **Figures 4a-4b**: depict different enlarged particulars of the notebook;
- **Figure 5**: shows a circuit scheme of a sensor included in the peripheral device;
- **Figure 6**: is a schematic block-diagram of the desktop.

### Detailed description of the preferred embodiment

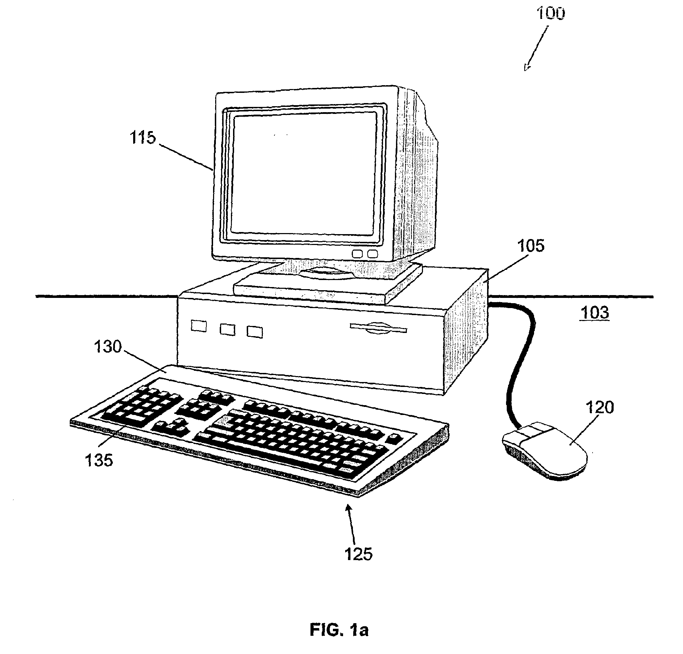

With reference in particular to Figure 1a, a Personal Computer 100 is shown. The computer 100 consists of a desktop (typically used at the office or at home), which is designed to fit comfortably on top of a desk 103. The desktop 100 is formed by a central unit 105 housing the electronic circuits controlling its operation. A monitor 115 and a mouse 120 are connected to the central unit 105 in a conventional manner.

A peripheral device 125 is further plugged into a port of the central unit 105 (not shown in the figure). The peripheral device 125 includes a mechanical keyboard 130. The keyboard 130 consists of a set of mechanical buttons (keys) 135, which are pressed by a user to input information into the desktop 100; typically, the keys 135 are classified as alphanumeric keys (letters and numbers), punctuation keys (comma, period, semicolon, and so on), and special keys (function keys, control keys, arrow keys, Caps Lock key, and so on).

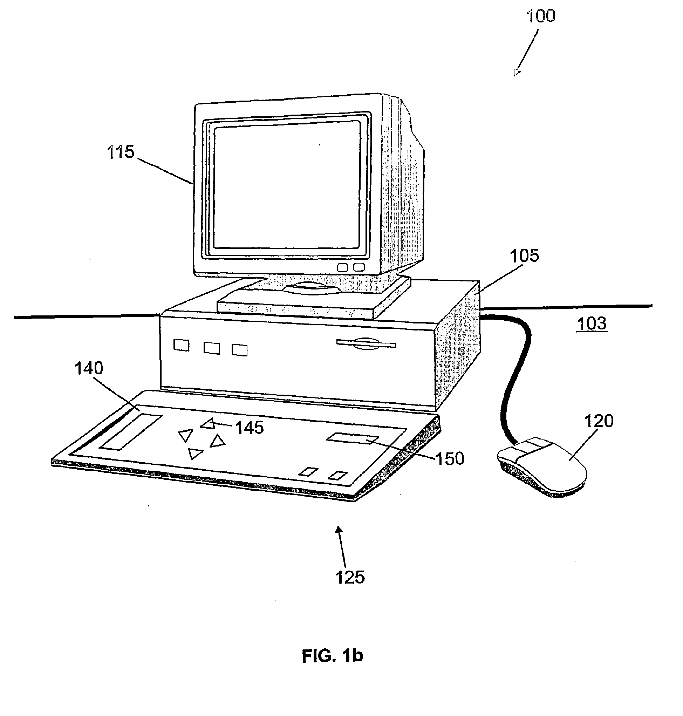

When the peripheral device 125 is turned upside down, as shown in Figure 1b, the user is provided with a touch-screen 140. The touch screen 140 consists of a display screen that is sensitive to human touch (for example, implemented with a resistive, a surface wave or a capacitive technology). The touch-screen 140 displays a set of objects 145 (such as geometrical figures), each one representing a virtual key. When the user touches the keys 145 with his/her finger, the corresponding information is entered into the desktop 100; optionally, the selected key flashes and/or a brief synthetic beep is output.

As described in detail in the following, the touch-screen is dynamically configured according to the current input need of the desktop 100. For example, the touch-screen displays a colored console with fire and direction keys when playing games, a browser toolbar when surfing on the INTERNET, a piano keyboard when playing music, a simplified keyboard (with a reduced set of enlarged keys) when used by kids or people with handicap, and so on; moreover, keys are made to blink so as to prompt their' selection (for example, in an interactive course). The touch-screen 140 may also be used to display a pop-up menu with selectable commands, or a secondary operational screen (such as a calculator when a spreadsheet is opened).

A portion of the touch-screen 140 defines a window 150 for displaying output information and/or for replicating the information entered by the user; preferably, additional output information is displayed in the background (below the keys 145 and the window 150). For example, a calendar is opened when an e-mail application is started, or advertisement banners are displayed when a web site is accessed.

Similar considerations apply if the desktop has a different structure or includes other units, if the desktop is replaced with an equivalent data processing system (such as a workstation), if the keyboard has a different layout or is of a different type (for example, a membrane keyboard with the keys covered by a transparent, plastic shell), if the output information is displayed in two or more windows, if no information is provided in the background, and the like.

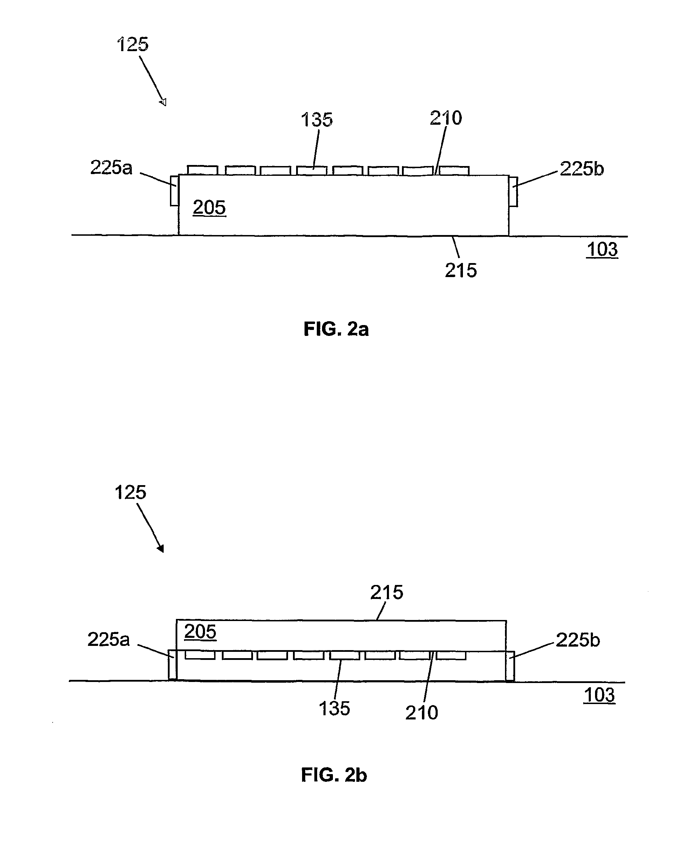

Considering now Figure 2a, the peripheral device 125 has a main body formed by a thin box 205 (for example, made of plastic material). The box 205 has two opposed main surfaces 210 and 215; the surface 210 carries the keyboard (with its keys 135), whereas the surface 215 carries the touch-screen. In the position shown in the figure (corresponding to Figure 1a), the surface 215 rests on the desk 103; as a consequence, the surface 210 is turned upwards so that the keyboard is accessible to the user. Two wings 225a and 225b are hinged along lateral edges of the surface 210; the wings 225a,225b are folded on corresponding sidewalls of the box 205.

Moving to Figure 2b, the peripheral device 125 is inverted (to the position shown in Figure 1b); the surface 215 is then turned upwards, so that the touch-screen is accessible to the user. In this case, the wings 225a,225b are unfolded until they project downwards (perpendicularly to the surface 210). The wings 225a,225b are higher than the keys 135; as a consequence, the keys 135 are spaced apart from the desk 103 so as to prevent their pressure.

Similar considerations apply if the peripheral device has a different structure, if the peripheral device rests on another bearing surface, if the wings are replaced with a set of foldaway pins (or other equivalent spacing means), and the like.

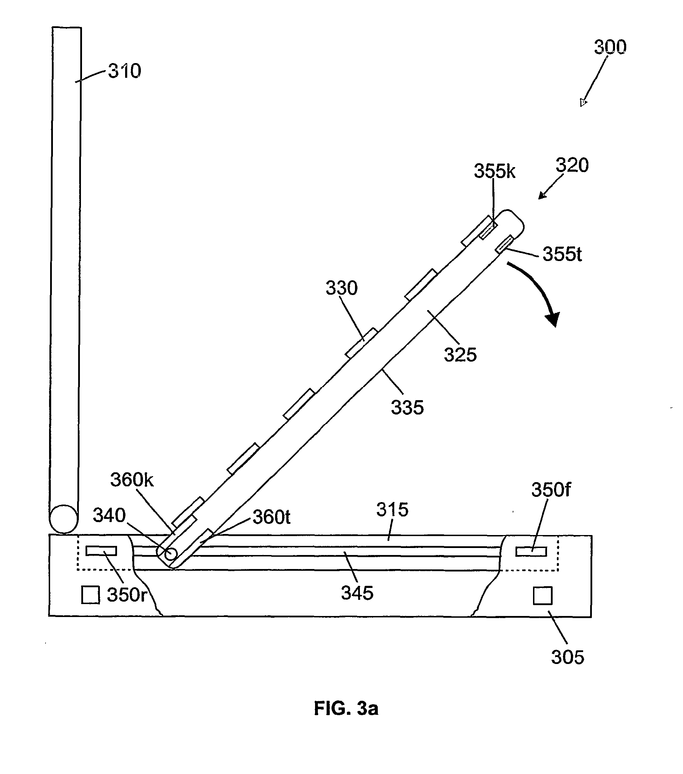

In an alternative embodiment of the invention, as shown in Figure 3a, the proposed solution is embedded in a notebook 300; the notebook 300 consists of a portable computer, which is extremely lightweight and is small enough to fit easily in a briefcase. The notebook 300 is formed by a case 305 housing its central unit; the display is integrated in a panel 310, which is hinged to the case 305 at a rear edge thereof (opposed to a front edge facing a user of the notebook 300).

The case 305 includes a housing 315 (closed by the display panel 310 when folded down the case 305) for a peripheral device 320 similar to the one described above. The peripheral device 320 is formed by a panel 325 having two opposed main surfaces, which carry a mechanical keyboard 330 and a touch-screen 335, respectively. Two pegs 340 extend laterally, near an internal edge of the panel 325. The pegs 340 slide along two guides 345 that are arranged on internal sidewalls of the housing 315 (extending transversally to the display panel 310); at the same time, the pegs 340 allow the panel 325 to pivot around the case 305.

A pair of catches 350f and a pair of catches 350r are provided on the case 305; the catches 350f are placed near a front end of the guides 345, whereas the catches 350r are placed near a rear end of the guides 345. A pair of recesses 355k is formed in the panel 325 (near its external edge) on the side of the keyboard 330; a pair of recesses 355t is likewise formed in the panel 325 (near its external edge) on the side of the touch-screen 335.. As described in detail in the following, the catches 350f engage the recesses 355t or the catches 350r engage the recesses 355k (according to the position of the peripheral device 320). At the same time, the catches 350r are received in mating grooves 360t that are formed in the panel 325 (near its internal edge) on the side of the touch-screen 335, or the catches 350f are received in mating grooves 360k that are formed in the panel 325 (near its internal edge) on the side of the keyboard 330.

As shown in the figure, the internal edge of the panel 325 is pushed towards the rear end of the guides 345 (acting as an end of stroke). The panel 325 is then folded down the case 305. As a consequence, the panel 325 is latched in a position with the keyboard 330 turned upwards (so as to be accessible to the user).

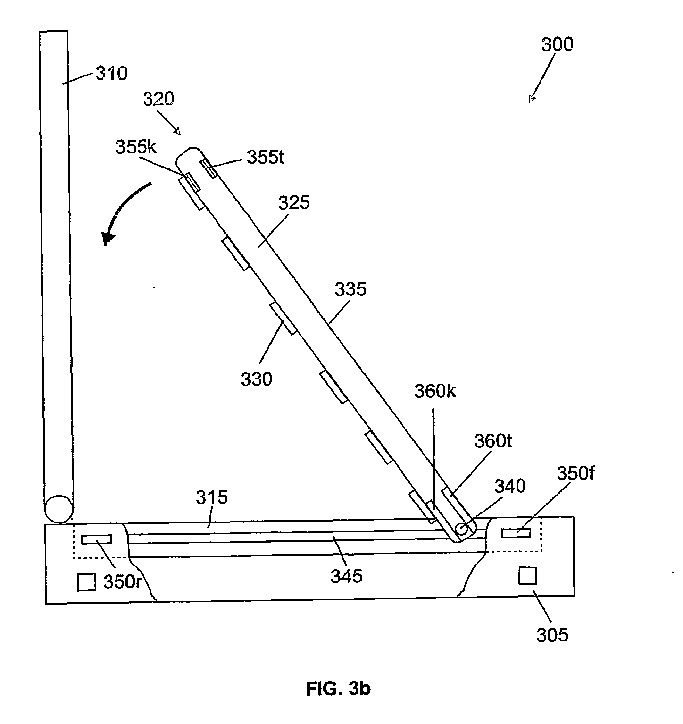

Moving now to Figure 3b, the user unlatches the panel 325 from the case 305. The panel 325 is unfolded, and its internal edge is pulled towards the front end of the guides 345 (acting as a further end of stroke). The panel 325 is then folded down the case 305 and latched in a position with the touch-screen 335 turned upwards, so as to be accessible to the user.

Similar considerations apply if the notebook has a different structure or is replaced with another data processing system (such as a palm-top), if the guides are arranged parallel to the display panel, if the pegs and the guides are replaced with a wheel mechanism or other equivalent means for sliding and pivoting the panel, and the like.

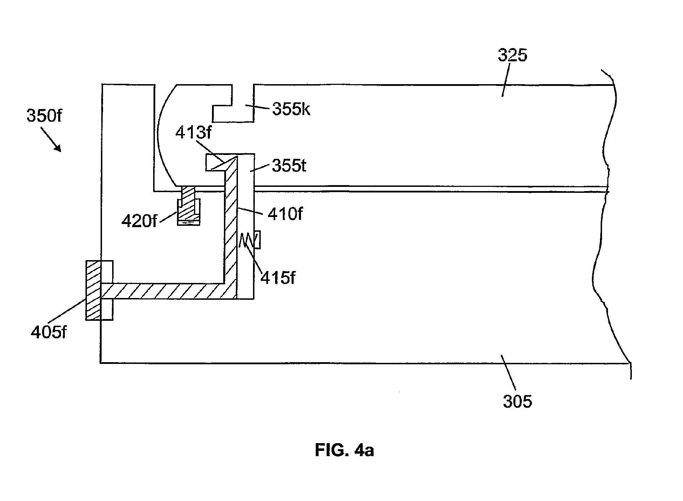

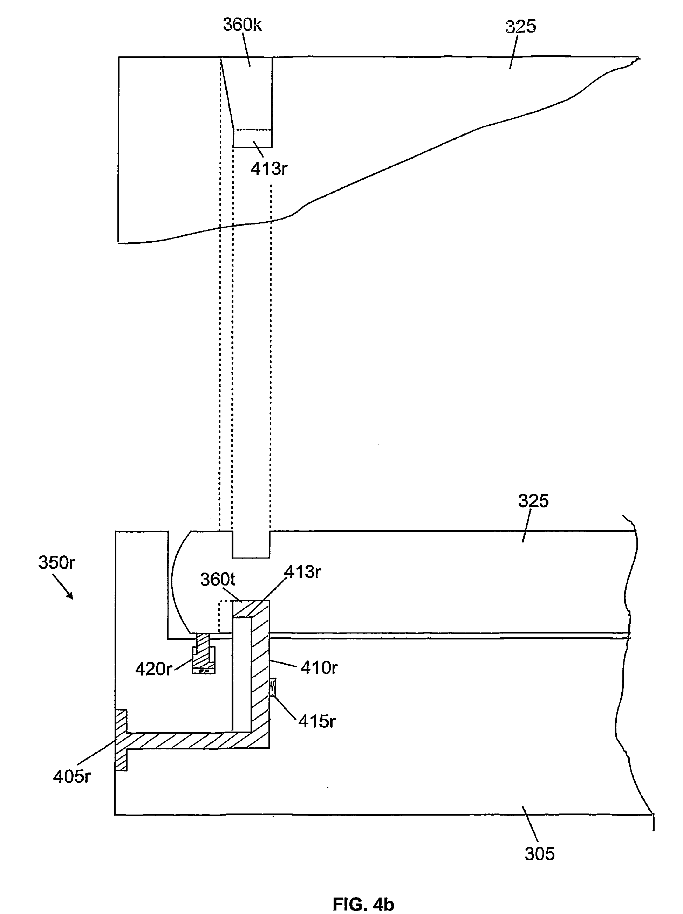

The structure of the catches 350f,350r is shown in greater detail in Figures 4a and 4b (wherein Figure 4a includes a cross-section view along a plane parallel to the display panel and passing through the catch 350f, and wherein Figure 4b includes a plan view and a cross-section view along a plane parallel to the display panel and passing through the catch 350r). Each catch 350f, 350r has a push button 405f,405r formed by a stem ending with an external head; the stem slides horizontally in a mating throw hole with a flat seat for receiving the head. A free end of the stem is up-turned to define a hook 410f,410r that projects upwards from the case 305. The hook 410f,410r ends with a tooth 413f,413r having an outward lead-in face and a bottom stop face. The hook 410f, 410r slides transversally in a corresponding housing; a spring 415f, 415r acts on the hook 410f, 410f so as to bias the push button 405f,405r to an extracted position. A complaint peg 420f,420r is further provided near the hook 410f,410r; the peg 420f,420r projects upwards from the case 305, and ends with an inward lead-in face (opposite the internal edge of the panel 325 when moving towards the corresponding end of the guides).

Each recess 355k,355t (see Figure 4a) has a mouth mating the tooth 413f,413r; the mouth is aligned with the housing of the hook 410f,410r when the panel 325 is folded down the case 305. The recess 355k,355t has a larger internal section, which extends outwards to define an undercut acting as an abutment for the stop face of the tooth 413f,413r.

Each groove 360k,360t (see Figure 4b) has a trapezoidal section in plan view. Particularly, an internal end of the groove 360k,360t is aligned with the housing of the hook 410f,410r (when the panel 325 is folded down the case 305). The groove 360k,360t widens towards a corresponding corner of the panel 325, so that a mouth thereof (at the internal edge of the panel 325) encompasses the tooth 413f,413r when the push button 405f,405r is in the extracted position; a sloped lateral surface joints the smaller end with the larger end of the groove 360k, 360t.

When the panel 325 is folded down the case 305 (with the keyboard turned upwards), the tooth 413r is received in the groove 360t (as shown in Figure 4b). The interference of the sloped surface of the groove 360t with the lead-in face of the tooth 413r pushes the hook 410r inwards, causing the spring 415r to yield resiliently. When the tooth 413r reaches the smaller end of the recess 360t, the push button 405r is in a completely retracted position. Moreover, the panel 325 acts on the lead-in face of the peg 420f so as to cause its lowering.

At the same time, the interference of the panel 325 with the lead-in face of the tooth 413f pushes the hook 410f inwards (as shown in Figure 4a). When the panel 325 is pressed against the case 305, the tooth 413f is received into the recess 355t. As soon as the tooth 413f emerges from the mouth of the recess 355t, the larger portion of the recess 355t clears the tooth 413f causing the spring 415f to push the hook 410f outwards (until the head of the push button 405f is completely extracted). As a consequence, the stop face of the tooth 413f abuts against the undercut of the recess 355t, thereby latching the panel 325 and the case 305 together. Moreover, the panel 325 also acts on the lead-in face of the peg 420f so as to cause its lowering.

When the user needs to invert the peripheral device, he/she presses the push buttons 405f. As a consequence, the stop face of each tooth 413f clears the undercut of the recess 355t, so as to unlatch the panel 325 from the case 305. The pegs 420f raise the panel 325, allowing the user to grab its external edge. The same operations described above are then repeated on the other side, until the panel 325 is folded down the case 305 (with the touch-screen turned upwards).

Similar considerations apply if the catches have a different structure (for example, with sliding commands instead of the push buttons), if the hooks are replaced with other locking elements, or more generally if equivalent means are used to latch the panel and the case together, if a pair of handles is provided for pulling the panel (eliminating the need of the complaint pegs), if a different mechanism is envisaged' for keeping the push buttons flush with the case (when the corresponding hooks are non-operative), or if equivalent means are provided for indicating the catches currently latching the panel and the case together (for example, using a series of LEDs).

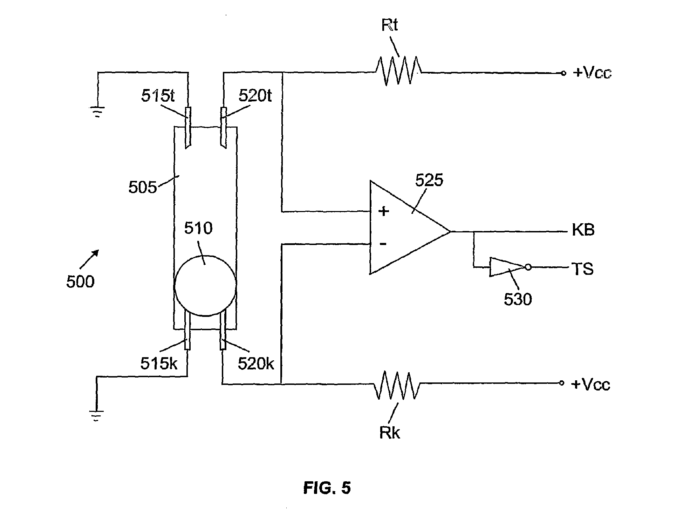

Considering now Figure 5, the peripheral device described above (either in the desktop or in the notebook) is provided with a sensor 500 for detecting its position. The sensor 500 if formed by a bulb 505, which is filled with a liquid having a relatively high viscosity (but that is not electrically conductive). A metallic ball 510 slides downwards inside the bulb 505 under the force of gravity.

A pair of metallic terminals 515k and 520k crosses a base of the bulb 505 (in the lower position when the peripheral device has the keyboard turned upwards); a pair of further metallic terminals 515t and 520t crosses an opposed base of the bulb 505 (in the upper position). The terminals 515k and 515t are connected to a reference terminal (or ground). The terminal 520k is connected to a first terminal of a resistor Rk, and the terminal 520t is connected to a first terminal of a resistor Rt. Both the resistors Rk and Rt have a second terminal that is connected to the positive terminal of a direct-voltage power supply +Vcc (for example, 5V), whose negative terminal is connected to the ground terminal.

The terminal 520k and the terminal 520t are further connected to the inverting input (-) and to the non-inverting input (+), respectively, of a comparator 525. The comparator 525 outputs a signal KB; the signal KB is asserted (at the voltage +Vcc) when the voltage at the non-inverting input is higher then the voltage at the non-inverting input, whereas the signal KB is deasserted (at the voltage 0V) otherwise. The comparator 525 has a hysteresis characteristic, so as to filter spurious signals (for example, due to a jolt of the peripheral device). The signal SB is provided to an inverter 530, which outputs a signal TS=KB.

In the position shown in the figure (keyboard turned upwards), the ball 510 short-circuits the terminals 515k and 520k. The voltage at the non-inverting input of the comparator 525 is then kept at +Vcc, whereas the voltage at its inverting input is brought to ground; as a consequence, the signal KB is asserted (and the signal TS is deasserted). Conversely, if the peripheral device is inverted (with the touch-screen turned upwards) the ball 510 short-circuits the terminals 515t and 520t. The voltage at the inverting input of the comparator 525 is then kept at +Vcc, whereas the voltage at its non-inverting input is brought to ground; as a consequence, the signal KB is deasserted (and the signal TS is asserted).

Similar considerations apply if the sensor has a different structure (for example, with a micro-machined element integrated in a chip of semiconductor material or with a pair of simple switches), or if equivalent means are provided for detecting the position of the peripheral device.

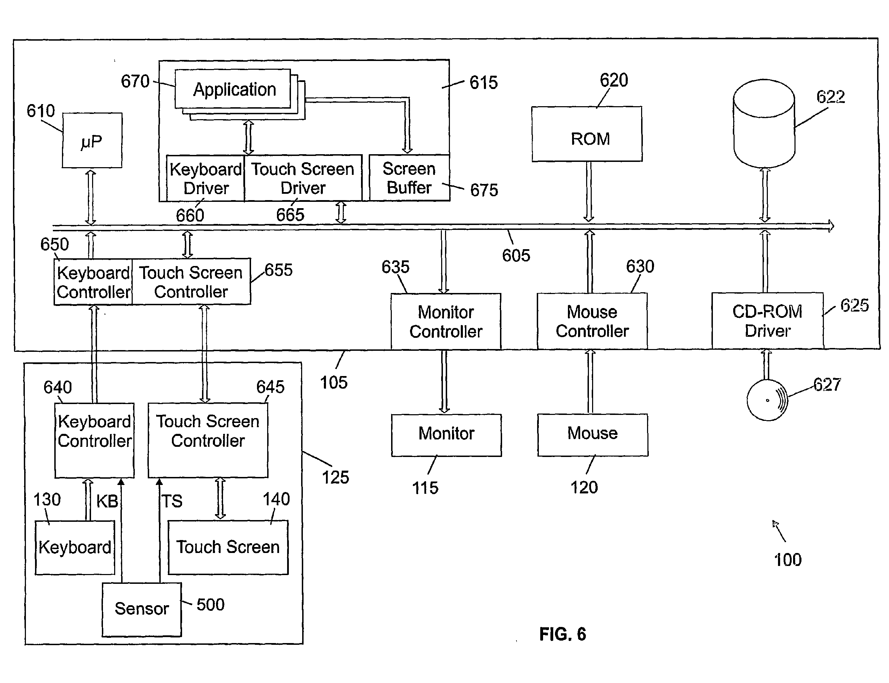

Moving now to Figure 6, a schematic block-diagram of the desktop 100 is shown (similar considerations apply to the notebook). The central unit 105 has an architecture based on a communication bus 605, to which the different components of the central unit 105 are connected in parallel. In detail, a microprocessor (µP) 610 controls operation of the desktop 100, a DRAM 615 is directly used as a working memory by the microprocessor 605, and a Read Only Memory (ROM) 620 stores basic code for a bootstrap of the desktop 100. The central unit 105 further includes a magnetic hard-disk 622 (embedding a respective controller), a driver 625 for reading CD-ROMs 627, a controller 630 for the mouse 120 and a controller 635 for the monitor 115.

The peripheral device 125 has an internal controller 640 for the keyboard 130 and an internal controller 645 for the touch-screen 140. The sensor 500 enables the keyboard internal controller 640 or the touch-screen internal controller 645 in mutual exclusion; for this purpose, the signal KB is supplied to an enabling pin of the keyboard internal controller 640, whereas the signal TS is supplied to an enabling pin of the touch-screen internal controller 645. The keyboard internal controller 640 directly interfaces with a corresponding external controller 650, which is connected to the bus 605 in the central unit 105; the touch-screen internal controller 645 likewise interfaces with an external controller 655 (connected to the bus 605 as well).

During operation of the desktop 100, programs and data (which have been installed onto the hard-disk 622 from CD-ROM 627) are typically loaded (at least partially) into the working memory 615. Particularly, a driver 660 controls the keyboard 130, whereas a driver 665 controls the touch-screen 140. The keyboard driver 660 and the touch-screen driver 665 communicate with one or more application programs 670; the application programs 670 interface with a screen buffer 675 for the monitor 115.

When the keyboard 130 is turned upwards, the keyboard internal controller 640 is enabled by the signal KB (while the touch-screen internal controller 645 is disabled by the signal TS). If a current application program 670 requires the use of the touch-screen 140, the application program 670 prompts the user to invert the peripheral device 125 (with a message displayed on the monitor 115). As soon as the touch-screen 140 is turned upwards, the touch-screen internal controller 645 is enabled by the signal TS (while the keyboard internal controller 640 is disabled by the signal KB). The application program 670 then controls the configuration of the touch-screen 140 through corresponding output instructions; the output instructions are provided to the touch-screen driver 665, which translates them into corresponding commands for the touch-screen controllers 655,645.

In every case, whenever the user selects a key (with the keyboard 130 or the touch-screen 140) the enabled internal controller 640 or 645 sends a corresponding scan code to the driver 660 or 665, respectively. The driver 660,665 translates the scan code into an instruction for the application program 670, which controls the screen buffer 675 accordingly.

Similar considerations apply if the desktop has a different architecture, if all the controllers of the keyboard and the touch-screen are integrated in the central unit, if equivalent software modules are provided, and the like.

More generally, the present invention proposes a peripheral device for a data processing system. The peripheral device includes a mechanical keyboard; the mechanical keyboard has a plurality of keys for entering information into the data processing system when the keys are pressed. The peripheral device of the invention further includes a configurable unit for displaying a visual representation of a plurality of further keys; the further keys are used for entering information into the data processing system when they are selected.

The solution of the invention provides a peripheral device that can be used as a standard keyboard, when working with applications doing ordinary computing work; at the same time, the peripheral device can be used as an alternative input device, so as to meet the input needs of different applications.

This result is achieved without any proliferation of different input devices, thereby saving time and space.

The proposed solution allows the peripheral device to be configured for specific applications in a very simple manner.

The preferred embodiment of the invention described above offers further advantages.

For example, the configurable unit consists of a touch-screen.

This allows the user to work with both input units (the keyboard and the touch-screen) in a very similar manner.

Advantageously, the keyboard and the touch-screen are arranged on opposed surfaces of the peripheral device.

The proposed structure does not require any additional space for the touch-screen.

Preferably, means are provided for spacing the keys apart from a surface bearing the peripheral device.

This feature prevents any pressure of the keys when using the touch-screen.

Alternatively, the peripheral device includes a tablet (wherein the keys are selected with a pen), a standard screen with an integrated touchpad (that is used to move a pointer on the screen for selecting the keys), or an equivalent configurable unit, no spacers are provided for the keys, or the keyboard and the touch screen.are arranged side-by-side.

In a preferred embodiment of the invention, a switch is used to enable the keyboard or the touch-screen in mutual exclusion.

This avoids any interference between the two input units, and reduces the power consumption of the peripheral device.

As a further improvement, a sensor detects the position of the peripheral device and enables the keyboard or the touch-screen accordingly.

The devised solution makes it possible to switch between the keyboard and the touch-screen automatically (simply turning the peripheral device upside down).

Advantageously, the touch-screen is further used for displaying output information.

This feature reduces the focus changing (between the monitor and the touch-screen) required to the eyes of the user. Moreover, the proposed solution makes it possible to provide information to the user in a very effective manner.

However, the solution according to the present invention leads itself to be implemented with both the keyboard and the touch-screen that are always enabled, with a manual switch that must be operated by the user for enabling the keyboard or the touch-screen, or even without displaying any output information on the touch-screen.

The peripheral device of the invention can be used either as an external unit (plugged into a port of the central unit) or as an internal unit (integrated in the central unit).

In the latter case, a guide mechanism is preferably provided for sliding and pivoting the peripheral device.

The devised solution is very simple, but at the same time effective.

Advantageously, the peripheral device is latched in its different operative positions.

This feature avoids any unwanted movement of the peripheral device.

As a further improvement, a generic indication is provided for identifying the buttons to be operated for unlatching the peripheral device.

The proposed characteristic facilitates the operations needed to invert the peripheral device.

Alternatively, another mechanism is used for turning the peripheral device (for example, pivoting the peripheral device around an axis perpendicular to the case), no indication is provided for identifying the buttons to be operated for unlatching the peripheral device, or the peripheral device is held in place only under the force of gravity.

Naturally, in order to satisfy local and specific requirements, a person skilled in the art may apply to the solution described above many modifications and alterations all of which, however, are included within the scope of protection of the invention as defined by the following claims.

## Claims

1. A peripheral device (125) for a data processing system (100) including a mechanical keyboard (130) having a plurality of keys (135) for entering information into the data processing system when the keys are pressed,
**characterized in that**
the peripheral device has a first surface (210) and a second surface (215) opposed to the first surface, the first surface carrying the mechanical keyboard (130) and the second surface carrying a configurable unit (140) for displaying a visual representation of a plurality of further keys (145) for entering information into the data processing system when the further keys are selected, wherein the mechanical keyboard (130) is accessible to a user of the data processing system when the peripheral device is in a first operative position with the first surface (210) turned upwards and the configurable unit (140) is accessible to the user when the peripheral device is in a second operative position with the second surface (215) turned upwards, wherein in both operative positions the first and second surfaces remain opposed to each other, the mechanical keyboard (130) being enabled only when the peripheral device is in the first operative position and the configurable unit (140) being enabled only when the peripheral device is in the second operative position.

2. The peripheral device (125) according to claim 1, wherein the configurable unit includes a touch-screen (140), the further keys being selected when touched.

3. The peripheral device (125) according to any preceding claim, further including means (225a,225b) for spacing the keys (135) apart from a surface (103) bearing the peripheral device in the second operative position.

4. The peripheral device (125) according to any preceding claim, further including switching means (500) for alternatively enabling the mechanical keyboard (130) or the configurable unit (140).

5. The peripheral device (125) according to claim 4, wherein the switching means includes a sensor (500) for detecting the position of the peripheral device.

6. The peripheral device (125) according to any preceding claim, further including means (150) for displaying output information on the configurable unit (140).

7. A data processing system (100;300) including the peripheral device (125;320) according to any preceding claim.

8. The data processing system (300) according to claim 7, further including a central unit (305) and means (340,345) for pivoting the peripheral device (320) around the central unit and for sliding an internal edge of the peripheral device along the central unit between a first end of stroke and a second end of stroke, the peripheral device being folded down the central unit in the first operative position or in the second operative position when the internal edge is at the first end of stroke or at the second end of stroke, respectively.

9. The data processing system (300) according to claim 8, further including latching means (350f,355t;350r,355k) for latching the peripheral device (320) in the first operative position or in the second operative position.

10. The data processing system (300) according to claim 9, wherein the latching means (350f,355t;350r,355k) includes first command means (405f) for unlatching the peripheral device (320) when in the first operative position, second command means (405r) for unlatching the peripheral device when in the second operative position, and means (360t,360k) for providing an indication identifying the first command means or the second command means when the peripheral device is in the first operative position or in the second operative position, respectively.

## Patentansprüche

1. Peripheriegerät (125) für ein Datenverarbeitungssystem (100), wobei das Peripheriegerät (125) eine mechanische Tastatur (130) mit einer Vielzahl von Tasten (135) zum Eingeben von Informationen in das Datenverarbeitungssystem durch Drücken der Tasten beinhaltet,
**dadurch gekennzeichnet, dass**
das Peripheriegerät eine erste Fläche (210) und eine der ersten Fläche gegenüberliegende zweite Fläche (215) aufweist, wobei die erste Fläche die mechanische Tastatur (130) und die zweite Fläche eine konfigurierbare Einheit (140) zum Anzeigen einer optischen Darstellung einer Vielzahl weiterer Tasten (145) zum Eingeben von Informationen in das Datenverarbeitungssystem durch Auswählen der weiteren Tasten
trägt, wobei ein Benutzer des Datenverarbeitungssystems auf die mechanische Tastatur (130) zugreifen kann, wenn sich das Peripheriegerät in einer ersten Betriebsposition mit nach oben geklappter erster Fläche (210) befindet, und auf die konfigurierbare Einheit (140) zugreifen kann, wenn sich das Peripheriegerät in einer zweiten Betriebsposition mit nach oben geklappter zweiter Fläche (215) befindet, wobei sich in beiden Betriebspositionen die erste und die zweite Fläche weiterhin einander gegenüberliegen und die mechanische Tastatur (130) nur dann aktiviert wird, wenn sich das Peripheriegerät in der ersten Betriebsposition befindet, und die konfigurierbare Einheit (140) nur dann aktiviert wird, wenn sich das Peripheriegerät in der zweiten Betriebsposition befindet.

2. Peripheriegerät (125) nach Anspruch 1, bei dem die konfigurierbare Einheit einen Berührungsbildschirm (Touchscreen) (140) beinhaltet und die weiteren Tasten durch Berühren ausgewählt werden.

3. Peripheriegerät (125) nach einem der vorhergehenden Ansprüche, das ferner Mittel (225a, 225b) zum Einhalten eines Abstandes zwischen den Tasten (135) und einer Fläche (103) beinhaltet, welche das Peripheriegerät in der zweiten Arbeitsstellung trägt.

4. Peripheriegerät (125) nach einem der vorhergehenden Ansprüche, das ferner Schaltmittel (500) zum wahlweisen Aktivieren der mechanischen Tastatur (130) oder der konfigurierbaren Einheit (140) beinhaltet.

5. Peripheriegerät (125) nach Anspruch 4, bei dem die Schaltmittel einen Sensor (500) zum Erkennen der Position des Peripheriegeräts beinhalten.

6. Peripheriegerät (125) nach einem der vorhergehenden Ansprüche, das ferner Mittel (150) zum Anzeigen von Ausgabeinformationen auf der konfigurierbaren Einheit (140) beinhaltet.

7. Datenverarbeitungssystem (100, 300), welches das Peripheriegerät (125, 320) nach einem der vorhergehenden Ansprüche beinhaltet.

8. Datenverarbeitungssystem (300) nach Anspruch 7, das ferner eine Zentraleinheit (305) und Mittel (340, 345) zum Schwenken des Peripheriegeräts (320) um die Zentraleinheit und zum Entlanggleiten einer Innenkante des Peripheriegeräts an der Zentraleinheit zwischen einer ersten und einer zweiten Endlage, wobei das Peripheriegerät in der ersten oder in der zweiten Betriebsposition nach unten auf die Zentraleinheit geklappt wird, wenn sich die Innenkante in der ersten bzw. in der zweiten Endlage befindet.

9. Datenverarbeitungssystem (300) nach Anspruch 8, das ferner Verriegelungsmittel (350f, 355t; 350r, 355k) zum Verriegeln des Peripheriegeräts (320) in der ersten oder in der zweiten Betriebsposition beinhaltet.

10. Datenverarbeitungssystem (300) nach Anspruch 9, bei dem die Verriegelungsmittel (350f, 355t; 350r, 355k) erste Befehlsmittel (405f) zum Entriegeln des Peripheriegeräts (320), wenn sich dieses in der ersten Betriebsposition befindet, zweite Befehlsmittel (405r) zum Entriegeln des Peripheriegeräts, wenn sich dieses in der zweiten Betriebsposition befindet, sowie Mittel (360t, 360k) zum Bereitstellen einer Anzeige beinhalten, welche die ersten oder zweiten Befehlsmittel kennzeichnet, wenn sich das Peripheriegerät in der ersten bzw. in der zweiten Betriebsposition befindet.

## Revendications

1. Un dispositif périphérique (125) pour un système de traitement de données (100), comprenant un clavier (130) mécanique, comprenant une pluralité de touches (135) pour introduire de l'information dans le système de traitement de données lorsque les touches sont pressées,
**caractérisé en ce que**
le dispositif périphérique comprend une première surface (210) et une deuxième surface (215), opposée à la première surface, la première surface portant le clavier (130) mécanique et la deuxième surface portant une unité (140) configurable, pour afficher une représentation visuelle d'une pluralité d'autres touches (145) pour introduire de l'information dans le système de traitement de données lorsque les autres touches sont sélectionnées, dans lequel le clavier (130) mécanique est accessible à un utilisateur du système de traitement de données lorsque le dispositif périphérique est en une première position fonctionnelle, la première surface (210) étant tournée vers le haut, et l'unité configurable (140) est accessible à l'utilisateur lorsque le dispositif périphérique est en une deuxième position fonctionnelle, la deuxième surface (215) étant tournée vers le haut, dans lequel, dans les deux positions fonctionnelles, les premières et deuxièmes surfaces restent opposées à chaque autre, le clavier (130) mécanique étant activé uniquement lorsque le dispositif périphérique se trouve à la première position fonctionnelle, et l'unité configurable (140) étant activée uniquement lorsque le dispositif périphérique est à la deuxième position fonctionnelle.

2. Le dispositif périphérique (125) selon la revendication 1, dans lequel l'unité configurable comprend un écran tactile (140), les autres touches étant sélectionnées lorsqu'elles sont touchées.

3. Le dispositif périphérique (125) selon l'une quelconque des revendications précédentes, comprenant en outre des moyens (225a, 225b) pour espacer les touches (135) d'une surface (103) portant le dispositif périphérique à la deuxième position fonctionnelle.

4. Le dispositif périphérique (125) selon l'une quelconque des revendications précédentes, comprenant en outre des moyens de commutation (500), pour activer alternativement le clavier (130) mécanique ou l'unité (140) configurable.

5. Le dispositif périphérique (125) selon la revendication 4, dans lequel les moyens de commutation comprennent un capteur (500) pour détecter la position du dispositif périphérique.

6. Le dispositif périphérique (125) selon l'une quelconque des revendications précédentes, comprenant en outre des moyens (150) pour afficher une information de sortie sur l'unité (140) configurable.

7. Un système de traitement de données (100 ; 300), comprenant le dispositif périphérique (125 ; 320) selon l'une quelconque des revendications précédentes.

8. Le système de traitement de données (300) selon la revendication 7, comprenant en outre une unité centrale (305) et des moyens (340, 345), pour faire pivoter le dispositif périphérique (320) autour de l'unité centrale et pour faire coulisser un bord interne du dispositif périphérique le long de l'unité centrale, entre une première fin de course et une deuxième fin de course, le dispositif périphérique étant replié sur l'unité central, à la première position fonctionnelle ou à la deuxième position fonctionnelle, lorsque le bord interne se trouve à la première fin de course ou à la deuxième fin de course, respectivement.

9. Le système de traitement de données (300) selon la revendication 8, comprenant en outre des moyens de verrouillage (350f, 355t ; 350r, 355k), pour verrouiller le dispositif périphérique (320) à la première position fonctionnelle ou à la deuxième position fonctionnelle.

10. Le système de traitement de données (300) selon la revendication 9, dans lequel les moyens de verrouillage (350f, 355t ; 350r, 355k) comprennent des premiers moyens de commande (405f), pour déverrouiller le dispositif périphérique (320) lorsqu'il se trouve à la première position fonctionnelle, des deuxièmes moyens de commande (405r), pour déverrouiller le dispositif périphérique lorsqu'il se trouve à la deuxième position fonctionnelle, et des moyens (360t, 360k), pour fournir une indication, identifiant les premiers moyens de commande ou les deuxièmes moyens de commande lorsque le dispositif périphérique se trouve à la première position fonctionnelle ou à la deuxième position fonctionnelle, respectivement.
